# EUROPEAN PATENT APPLICATION

(11) **EP 4 390 829 A1**
(43) Date of publication of application: **26.06.2024**
(21) Application number: 22858192.2
(22) Date of filing: 05.07.2022
(51) Int. Cl.: G06Q 50/16

(54) **INFORMATION PROCESSING DEVICE, INFORMATION PROCESSING METHOD, INFORMATION PROCESSING PROGRAM, AND INFORMATION PROCESSING SYSTEM**

(30) Priority: 17.08.2021 JP 2021132834
(71) Applicant: Serendipity Inc., Tokyo 162-0803 (JP)
(72) Inventor: SUWA Etsuko, Shinjuku-ku, Tokyo 162-0803 (JP)
(74) Representative: Global IP Europe Patentanwaltskanzlei
(86) International application number: PCT/JP2022/026668
(87) International publication number: WO 2023/021869

(57) **Abstract**

To provide an information processing device, an information processing method, an information processing program, and an information processing system that allow the user to efficiently search for properties matching his/her preference.

An information processing device of the present invention includes a storage unit storing images or videos in two or more categories for each property, and a transmission unit transmitting the images or videos in two or more categories for each property to a user terminal.

## Description

### FIELD

The present invention relates to an information processing device, an information processing method, an information processing program, and an information processing system.

### BACKGROUND

Conventionally, when looking for a house or a room (hereinafter referred to as "property"), people would visit a real estate agency that has a branch office in the area they are interested in and tell the agent the desired conditions, such as floor plan and cost, to have the property presented. Nowadays, the development of the Internet allows users to view information about properties (hereinafter referred to as "property information") over the Internet. Systems for finding a house or a room on the Internet allow users to search for a desired property by entering desired conditions such as floor plan and cost as search conditions. For example, users can search for a property using search conditions such as walking distance from a nearby train station, building structure, age of the building, and number of floors.

A recent proposal discusses allowing a terminal to show the user environmental information (e.g., sound, vibration, temperature, humidity, brightness, daylight hours) obtained from various sensors installed in a property. The proposal claims that the user can learn how much better the environment at the property is compared to his/her current residence.

### CITATION LIST

### PATENT LITERATURE

[Patent Literature 1] JP 2001-297295 A

### BRIEF SUMMARY

### TECHNICAL PROBLEM

The conventional proposed method requires the user to examine the search results and adjust the search conditions to find a residence he/she likes, which is very tedious.

The present invention has been made in view of the foregoing, and an object thereof is to provide an information processing device, an information processing method, an information processing program, and an information processing system that allow the user to efficiently search for properties matching his/her preference.

### SOLUTION TO PROBLEM

In order to solve the problem, an information processing device of the present invention includes a storage unit storing images or videos in two or more categories for each property and a transmission unit transmitting the images or videos in two or more categories for each property to a user terminal.

### ADVANTAGEOUS EFFECTS

The present invention provides an information processing device, an information processing method, an information processing program, and an information processing system that allow the user to efficiently search for properties matching his/her preference.

### BRIEF DESCRIPTION OF DRAWINGS

FIG. 1 shows an exemplary schematic configuration of an information processing system according to an embodiment.
FIG. 2 shows an exemplary hardware configuration of a server according to the embodiment.
FIG. 3 shows an exemplary database stored in a storage device of the server according to the embodiment.
FIG. 4 shows an exemplary functional configuration of the server according to the embodiment.
FIG. 5A shows an exemplary hardware configuration of a user terminal according to the embodiment.
FIG. 5B shows an exemplary functional configuration of the user terminal according to the embodiment.
FIG. 6 shows an exemplary window displayed on a display device of the user terminal according to the embodiment.
FIG. 7 shows an exemplary window displayed on the display device of the user terminal according to the embodiment.
FIG. 8 shows an exemplary window displayed on the display device of the user terminal according to the embodiment.
FIG. 9 shows an exemplary window displayed on the display device of the user terminal according to the embodiment.
FIG. 10 shows an exemplary window displayed on the display device of the user terminal according to the embodiment.
FIG. 11 shows an exemplary window displayed on the display device of the user terminal according to the embodiment.
FIG. 12 is a flowchart of an exemplary information process by the server according to the embodiment.
FIG. 13 is a flowchart of an exemplary information process by the server according to the embodiment.
FIG. 14 is a flowchart of an exemplary information process by the server according to the embodiment.
FIG. 15 is a flowchart of an exemplary information process by the server according to the embodiment.
FIG. 16 is a flowchart of an exemplary information process by the server according to the embodiment.
FIG. 17 shows an exemplary database stored in a storage device of a server according to a second variation of the embodiment.
FIG. 18 shows an exemplary functional configuration of the server according to the second variation of the embodiment.
FIG. 19 is a flowchart of an exemplary information process by the server according to the second variation of the embodiment.
FIG. 20 is a flowchart of an exemplary information process by the server according to the second variation of the embodiment.
FIG. 21 shows an exemplary window on a display device of a user terminal according to the second variation of the embodiment.

### DETAILED DESCRIPTION

In the following, an embodiment of the present invention is described with reference to the drawings.

### [Embodiment]

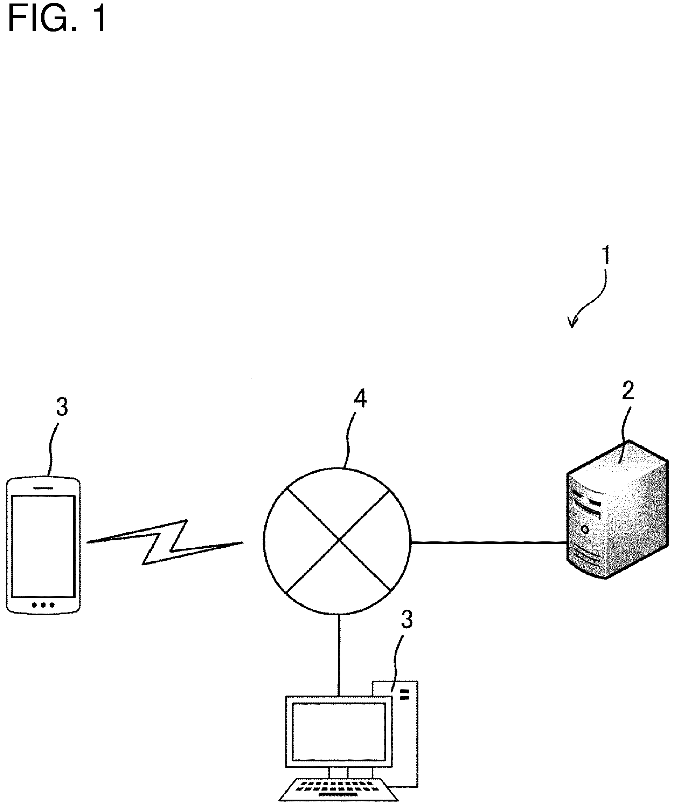

FIG. 1 shows an exemplary schematic configuration of an information processing system 1 according to an embodiment. First, with reference to FIG. 1, the configuration of the information processing system 1 is described. The information processing system 1 includes a server 2 (information processing device) and a user terminal 3 connected to the server 2 via a network 4. The number of the server 2 and the number of the user terminal 3 included in the information processing system 1 are arbitrary. Communication between the server 2 and the user terminal 3 may be wireless or wired.

### (Server 2)

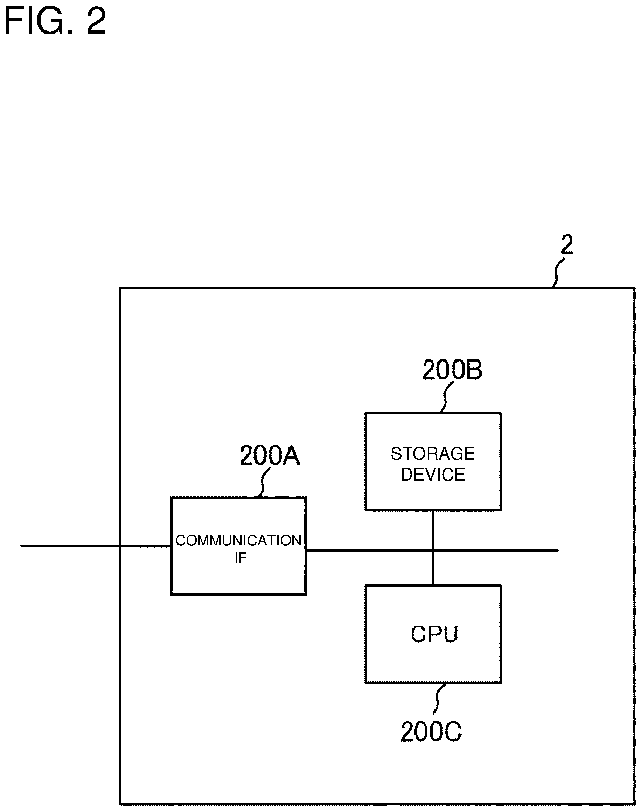

FIG. 2 shows an exemplary hardware configuration of the server 2 (information processing device). As shown in FIG. 2, the server 2 includes a communication IF 200A, a storage device 200B, a CPU 200C and others. The server 2 may include an input device (e.g., a keyboard, a touchscreen) and a display device (e.g., a liquid crystal monitor, an organic EL monitor).

The communication IF 200A is an interface for realizing communication with an external terminal (the user terminal 3 in the embodiment).

The storage device 200B is, for example, an HDD or a semiconductor storage device. The storage device 200B stores an information processing program and various data for use in the server 2. While the information processing program and various data are stored in the storage device 200B of the server 2 in the present embodiment, they may be stored in an external storage device such as a USB memory or an external server connected via the network to be referred to or downloaded as necessary.

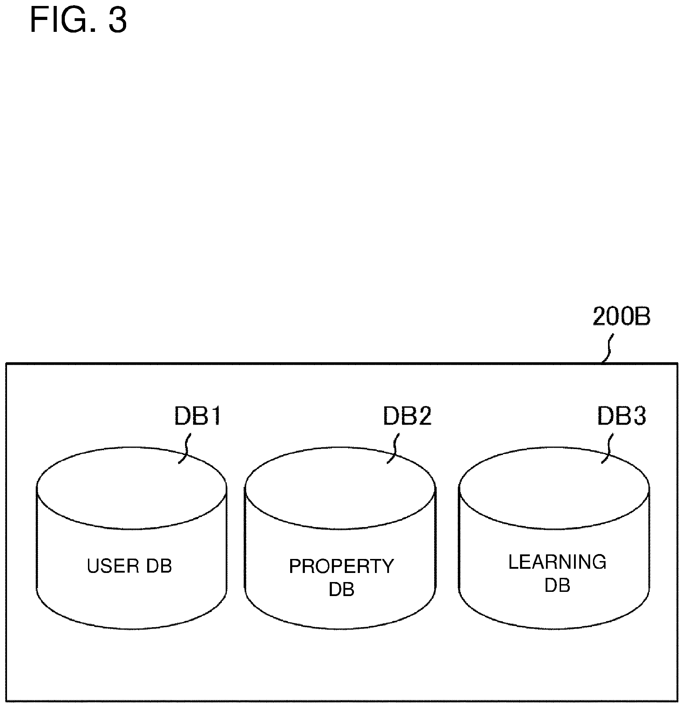

As shown in FIG. 3, the storage device 200B stores a user DB 1, a property DB2, a learning DB3 and others.

The user DB 1 stores information on each user (hereinafter referred to as user information) in association with a user ID. As the user information, the user DB 1 stores name, gender, age, family structure, and search conditions (if entered by the user) in association with the user ID. The search condition will be described later.

What information to store as the user information is arbitrary. For example, information such as address and contact may further be stored as the user information.

The user DB 1 further stores a login ID and a login password in association with each other. The user ID may be used as the login ID.

The property DB2 stores information on each property (hereinafter referred to as property information) in association with the property ID. As property information associated with the property ID, the property DB2 stores property type (apartment, condominium, detached house, others and the like), contract type (sale or lease), property name, cost (including information such as rent (when lease), deposit (when lease), key money (when lease), price (when sale), common service fee, maintenance fee inclusive, deposit, key money, and parking lot fee), parking lot (information such as parking lot, bike parking lot (bicycle, motorcycle)), stories/floor, year-month built, building age, occupied area (tsubo or square meter), floor plan (e.g., studio, 1K, 1DK, 1LDK, 2K, 2DK, 2LDK, 3K, 3DK, 3LDK, 4K, 4DK, 4LDK or more), transportation (e.g., X line/X station, 12-minute walk), location (address), utilities/amenities (e.g., bathroom dryer, counter kitchen, disposer, walk-in closet, self-locking door, video intercom, delivery box, elevator, shared guest room), conditions (e.g., current status: vacant, delivery: immediate, transaction: mediation), the images or videos of the property (hereinafter referred to as imagery), agent (agent name and contact) and others.

As to the property imagery, one or more pieces of imagery are stored for each category. The categories may be property floor plan, exterior, entrance, doorway, living room, kitchen, washstand, interior, storage, view, toilet, bath (bath), balcony and others.

What information to store as the property information is arbitrary. For example, the information such as owner and builder may be further stored as the property information.

In association with the user ID, the learning DB3 stores user's preference (likes and dislikes) learned by a learning unit 204, which will be described later. For example, the learning DB3 numerically stores user's preference (likes and dislikes) for each imagery category (e.g., floor plan, exterior, entrance, doorway, living room, kitchen, washstand, interior, storage, view, toilet, bath (bath), balcony and others).

The various data stored in the storage device 200B may be partially or entirely stored in an external storage device such as a USB (Universal Serial Bus) memory or an external HDD, or the storage device of another information processing device connected via the network 4. In this case, the server 2 refers to or acquires various information stored in the external storage device or the storage device of another information processing device. While the data are stored in two separate databases (the user DB1 to the learning DB3) in storage device 200B in the present embodiment, the number of the databases is arbitrary. The data may not necessarily be stored as databases in the storage device 200B.

The CPU 200C controls the server 2 and includes ROM (Read Only Memory) and RAM (Random Access Memory), which are not shown.

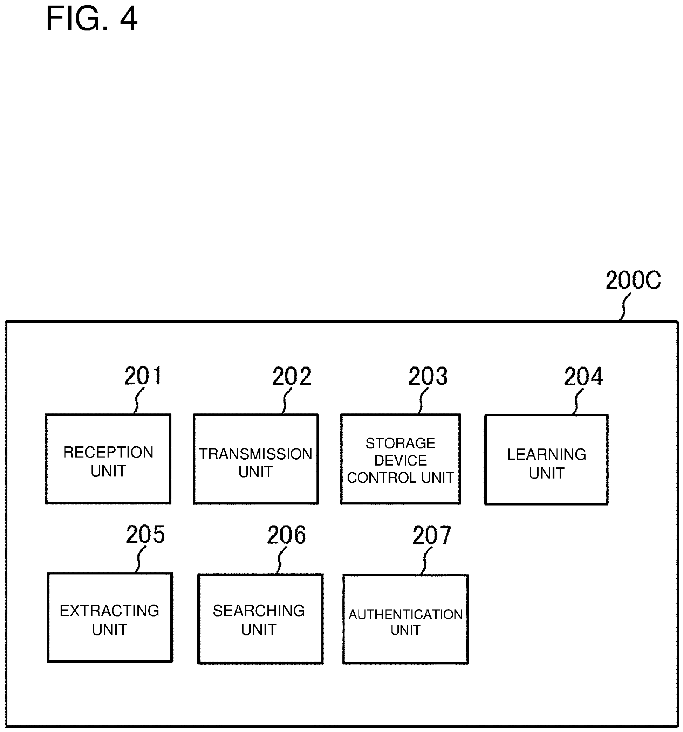

FIG. 4 shows an exemplary functional configuration of the server 2 according to the embodiment. As shown in FIG. 4, the server 2 includes functions such as a reception unit 201, a transmission unit 202, a storage device control unit 203, a learning unit 204, an extracting unit 205, a searching unit 206, an authentication unit 207 and others. The functions shown in FIG. 4 are realized by the CPU 200C executing an information processing program stored in the ROM (not shown) of the server 2.

The reception unit 201 receives data transmitted from the user terminal 3 via the network 4. For example, from the user terminal 3, the reception unit 201 receives a selection indicative of the user selecting one or more pieces of imagery from two or more pieces of imagery. Furthermore, for example, the reception unit 201 receives an instruction to display the details of a property. Furthermore, for example, the reception unit 201 receives an instruction to reset the user's preference for properties learned by the learning unit 204 for each imagery category.

The transmission unit 202 transmits data to the user terminal 3 via the network 4. For example, the transmission unit 202 transmits, to the user terminal 3, property imagery extracted by the extracting unit 205 and property imagery retrieved by the searching unit 206. Here, the transmission unit 202 transmits imagery in two or more categories per property to the user terminal 3.

The storage device control unit 203 controls the storage device 200B. For example, the storage device control unit 203 writes and reads data to and from the storage device 200B.

The learning unit 204 learns user's preference for properties according to the selection result received by the reception unit 201. The learning unit 204 learns user's preference for properties for each imagery category (e.g., floor plan, exterior, entrance, doorway, living room, kitchen, washstand, interior, storage, view, toilet, bath (bath), balcony and others) according to imagery selected by the user, or user-selected imagery, received by the reception unit 201. Specifically, the learning unit 204 updates the numerical value of the user's preference stored in the learning DB3 for each imagery category according to the user-selected imagery.

In this manner, by learning user's preference for each imagery category, the system can learn what exterior, entrance, or floor plan the user likes.

Furthermore, according to an instruction to reset the preference received by the reception unit 201, the learning unit 204 resets, for each imagery category, the user's preference for properties.

The learning unit 204 can learn by any other known learning method without being limited to the above.

The extracting unit 205 extracts imagery from properties retrieved by the searching unit 206 according to the user's preference for properties learned by the learning unit 204. For example, the extracting unit 205 extracts imagery sequentially in descending order of the user's preference learnt by the learning unit 204 (e.g., in descending order of similarity to the user-selected imagery) from the properties retrieved by the searching unit 206. Here, known techniques can be used for determining similarly of imagery. When the learning unit 204 has not learned yet, the extracting unit 205 extracts imagery retrieved by the searching unit 206 sequentially irrespective of preference.

For example, the searching unit 206 searches for properties that satisfy search conditions from the property DB2 according to the search conditions received by the reception unit 201.

The authentication unit 207 authenticates login IDs and login passwords. Specifically, the authentication unit 207 determines whether there is a combination of login ID and login password stored in the storage device 200B that matches the combination of login ID and login password of the user trying to log in. If there is a matching combination, the authentication unit 207 allow the user to log in; if there is no matching combination, the authentication unit 207 does not allow the user to log in.

### (User Terminal 3)

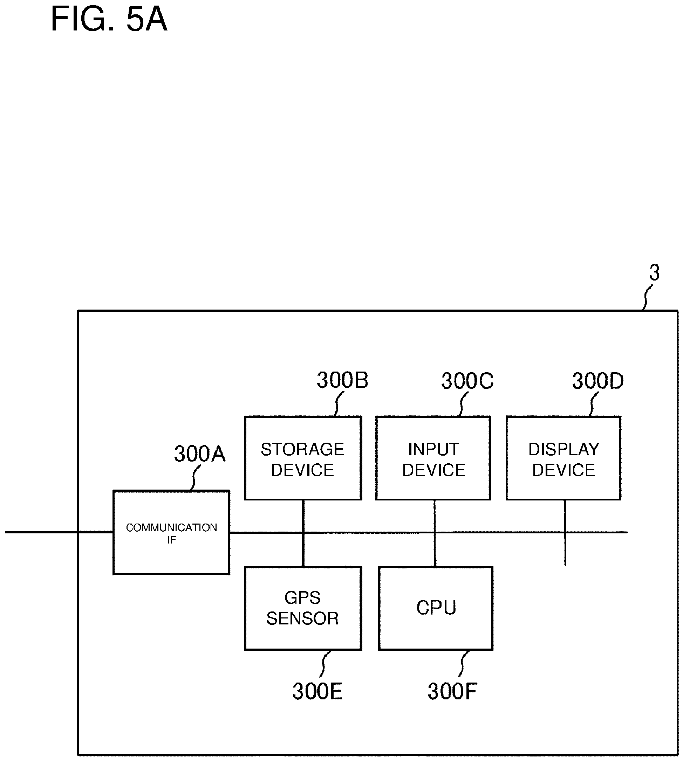

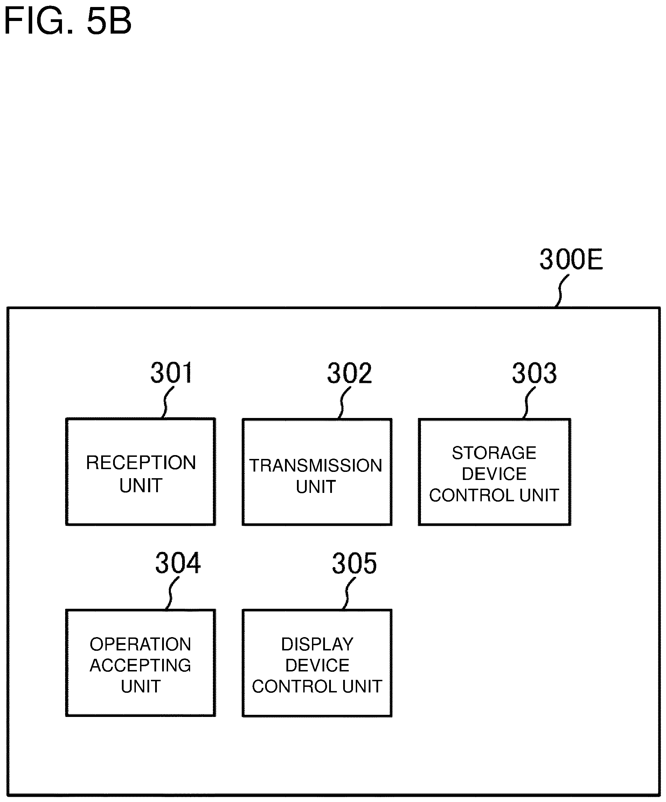

FIG. 5A shows an exemplary hardware configuration of the user terminal 3. FIG. 5B shows an exemplary functional configuration of the user terminal 3. The user terminal 3 is a mobile terminal (e.g., a smartphone or a tablet terminal) or a PC (Personal Computer). As shown in FIG. 5A, the user terminal 3 includes a communication IF 300A, a storage device 300B, an input device 300C, a display device 300D, a GPS sensor 300E, a CPU 300F and others.

The communication IF 300A is an interface for realizing communication with another device (the server 2 in the embodiment).

The storage device 300B is, for example, an HDD (Hard Disk Drive) or a semiconductor storage device (SSD (Solid State Drive)). The storage device 300B stores the identifier (ID) of the user terminal 3, an information processing program and others. The identifier may be newly applied to the user terminal 3 by the server 2. Alternatively, the IP (Internet Protocol) address or the MAC (Media Access Control) address may be used as the identifier.

The input device 300C is, for example, a keyboard or a touchscreen. By operating the input device 300C, the user can enter data necessary for using the information processing system 1.

The display device 300D is, for example, a liquid crystal monitor or an organic EL monitor. The display device 300D displays any window necessary for using the information processing system 1.

The GPS sensor 300E receives signals from a GPS satellite and calculates the current position based on the received signals.

The CPU 300F controls the user terminal 3 and includes ROM and RAM, which are not shown.

As shown in FIG. 5B, the user terminal 3 includes functions such as a reception unit 301, a transmission unit 302, a storage device control unit 303, an operation accepting unit 304 (accepting unit), and a display device control unit 305 (display control unit). The functions shown in FIG. 5B are realized by the CPU 300F executing an information processing program stored in the storage device 300B and others.

The reception unit 301 receives data transmitted from the server 2. For example, the reception unit 301 receives property details (property information) including the property imagery transmitted from the server 2.

The transmission unit 302 adds an identifier to the data entered on the input device 300C and transmits the data to the server 2. For example, the transmission unit 302 transmits the selection accepted by the operation accepting unit 304 to the server 2. By the identifier added to the data transmitted from the user terminal 3, the server 2 recognizes which user terminal 3 the received data has been transmitted from.

The storage device control unit 303 controls the storage device 300B. Specifically, the storage device control unit 303 controls the storage device 300B to write and read data.

The operation accepting unit 304 (accepting unit) accepts input operations on the input device 300C.

For example, the operation accepting unit 304 accepts a selection of one or more pieces of imagery from two or more pieces of imagery that the display device control unit 305 displays on the display device 300D.

The display device control unit 305 controls the display device 300D. Specifically, the display device control unit 305 controls the display device 300D to display the windows described later.

For example, on the display device 300D, the display device control unit 305 displays property details (property information) received by the reception unit 301. Here, the display device control unit 305 does not display imagery sorted for each property and displays imagery on the display device 300D unsorted for each property.

In the present embodiment, application software (hereinafter also referred to as the app) is installed in the user terminal 3, and the data transmitted from the server 2 is displayed on the application. Here, the data transmitted from the server 2 may be displayed on a web browser, for example.

### (Display Window Example)

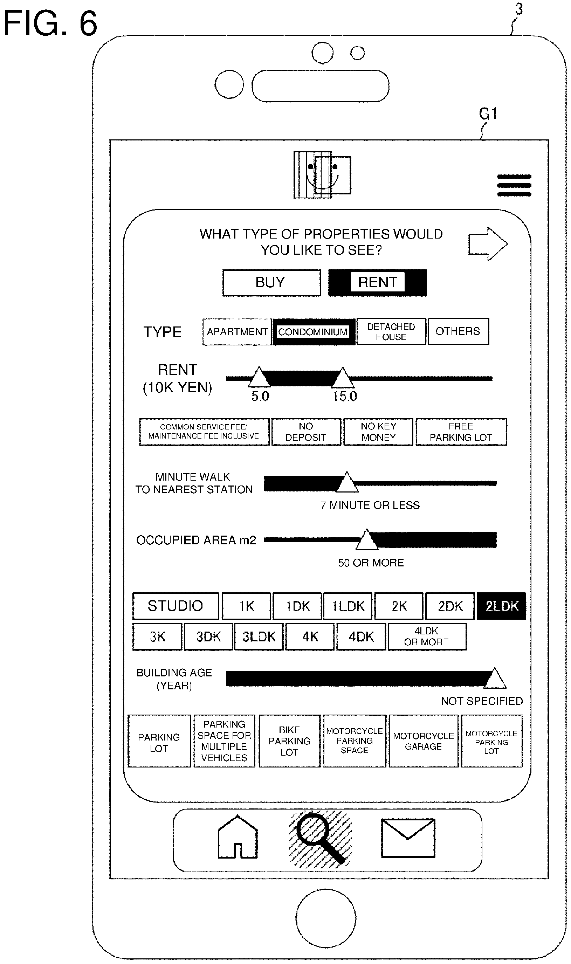

FIGS. 6 to 11 each show an exemplary window displayed on the display device 300D of the user terminal 3 according to the embodiment. In the following, with reference to FIGS. 6 to 11, a description will be given of exemplary windows on the display device 300D of the user terminal 3 according to the embodiment. Note that, the windows shown in FIGS. 6 to 11 are merely examples, and other display modes may be employed.

### (Search Window G1)

FIG. 6 shows an exemplary search window G1. Through the search window G1, the user can operate the input device 300C of the user terminal 3 to enter search conditions such as contract type (to select "Buy" or "Rent" in FIG. 6), property type (to select "Apartment", "Condominium", "Detached house", "Others" in FIG. 6), property price (to specify the range of price "Rent (10k yen)" using the slider in FIG. 6, and to select "Common service fee/maintenance fee inclusive", "No deposit", "No key money", "Free parking lot" in FIG. 6), the walking time from the property to the nearest station (to specify the walking time range using the slider in FIG. 6), property occupied area (to specify the occupied area range using the slider in FIG. 6), property floor plan (to select "Studio", " 1K", "1DK", "1LDK", "2K", "2DK", "2LDK", "3K", "3DK", "3LDK", "4K", "4DK", "4LDK or larger" in FIG. 6), property building age (to specify the building age range using the slider in FIG. 6), parking lot (to select "Parking lot", "Parking space for multiple vehicles", "Bike parking lot", "Motorcycle parking space", "Motorcycle garage", "Motorcycle parking lot" in FIG. 6).

### (Search Window G2)

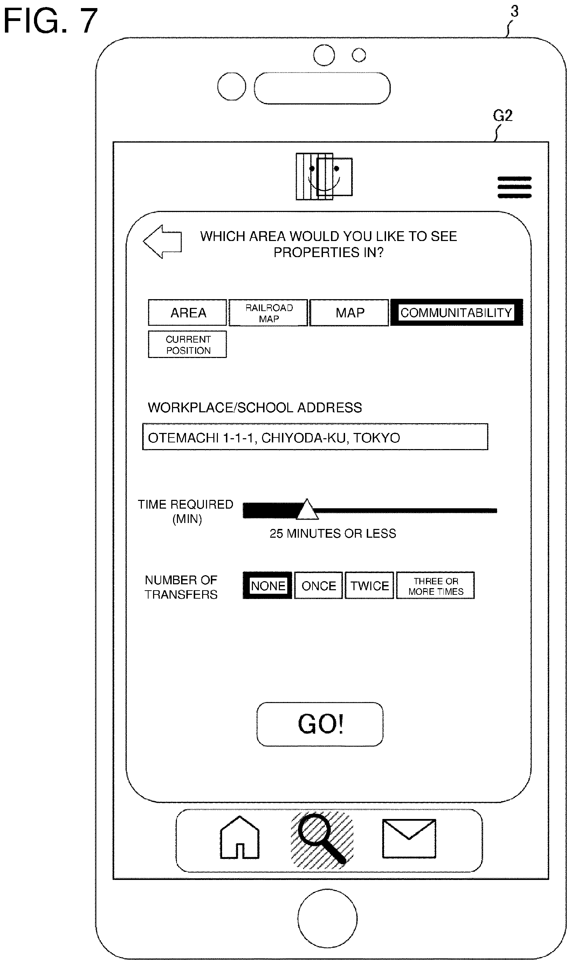

FIG. 7 shows an exemplary search window G2. Through the search window G2, the user can operate the input device 300C of the user terminal 3 to enter property location conditions as the search conditions. For example, through the search window G2 shown in FIG. 7, the user can select "Area (region)", "Railroad map", "Map", "Commutability", and "Current position". "Area (region)" specifies the area in which properties are searched for. "Railroad map" specifies the railroad line and station around which properties are searched for. "Map" specifies the area in which properties are searched for based on a map. "Current position" specifies the range of searching for properties based on the current position of the user terminal 3 calculated by the GPS sensor 300E. "Commutability" allows the user to enter "workplace/school address", time required (to specify the commuting time using the slider in FIG. 7) and to specify the number of transfers (to select "None", "Once", "Twice", "Three or more times" in FIG. 7).

After entering the search conditions, when the user selects "GO!" operating the input device 300C, the searching unit 206 of the server 2 starts search.

### (Search Result Windows G3 to G5)

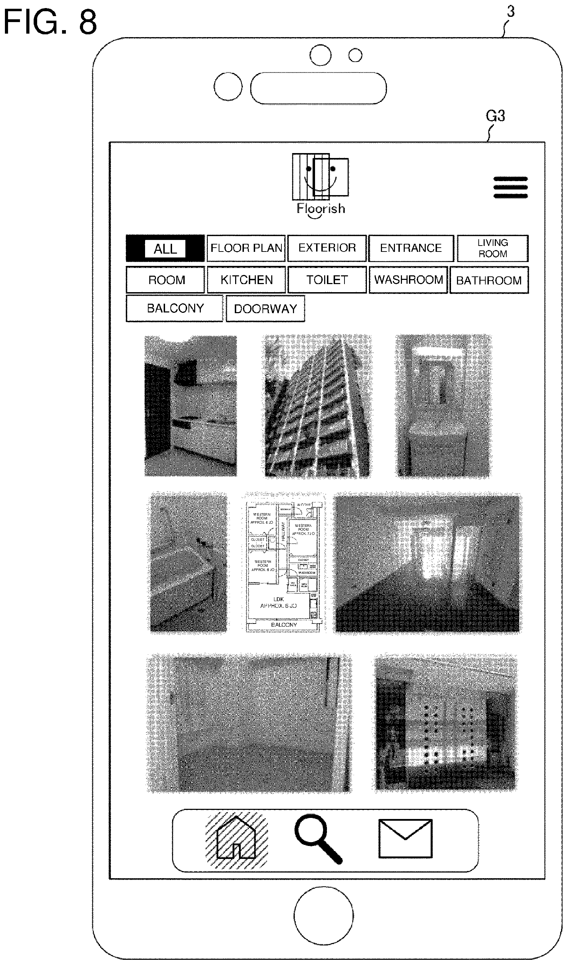

FIGS. 8 to 10 show exemplary search result windows G3 to G5. The search result windows G3 to G5 show properties that satisfy the search conditions that the user has entered through the search windows G1, G2 described referring to FIGS. 1 and 2. At the upper part of the search result windows G3 to G5, tabs for switching windows are displayed. By selecting a tab operating the input device 300C of the user terminal 3, the user can switch the window displayed on the display device 300D of the user terminal 3. (In an example in FIGS. 8 to 10, the selectable tabs are "All", "Floor plan", "Exterior", "Entrance", "Living room", "Room (interior)", "Kitchen", "Toilet", "Washroom (washstand)", "Bathroom (bath (bath))", "Balcony", and "Doorway". There may be tabs "Storage" and "View".)

### (Search result window G3)

The search result window G3 shown in FIG. 8 is an exemplary window displayed on the display device 300D of the user terminal 3 when the "All" tab is selected. When the "All" tab is selected, the imagery of every category associated with the properties satisfying the search conditions is displayed. Here, the display device control unit 305 does not display the imagery sorted for each property and displays the imagery on the display device 300D unsorted for each property. That is, the imagery is displayed in a random manner without being organized for each property. Note that, by scrolling the window on the display device 300D, the user can have hidden imagery displayed on the display device 300D.

### (Search Result Window G4)

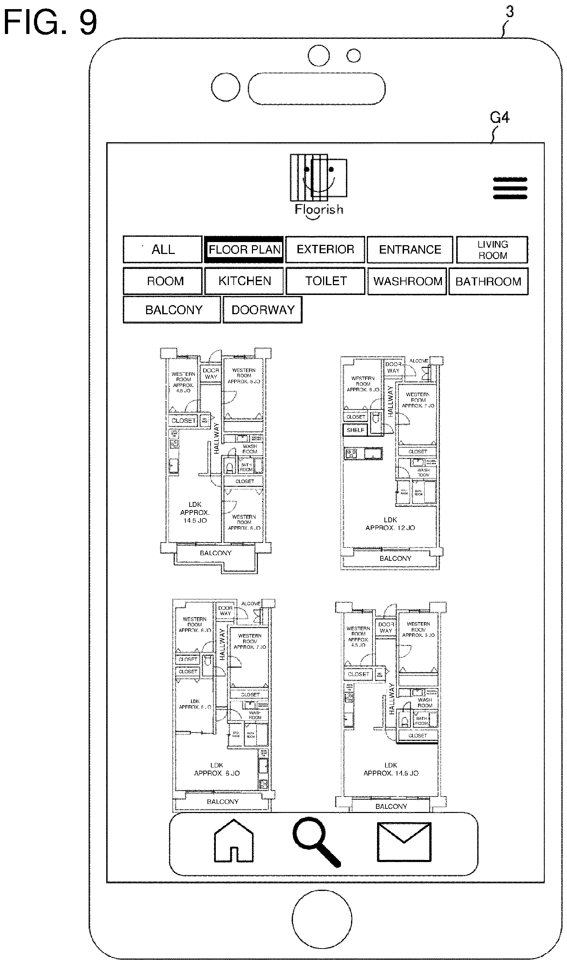

The search result window G4 shown in FIG. 9 is an exemplary window displayed on the display device 300D of the user terminal 3 when the "Floor plan" tab is selected. When the "Floor plan" tab is selected, out of all imagery associated with the properties satisfying the search conditions, imagery whose category is floor plan is displayed. Here, the display device control unit 305 does not display the imagery sorted for each property and displays the imagery on the display device 300D unsorted for each property. That is, the imagery is displayed in a random manner without being organized for each property. Note that, by scrolling the window on the display device 300D, the user can have hidden imagery displayed on the display device 300D.

### (Search Result Window G5)

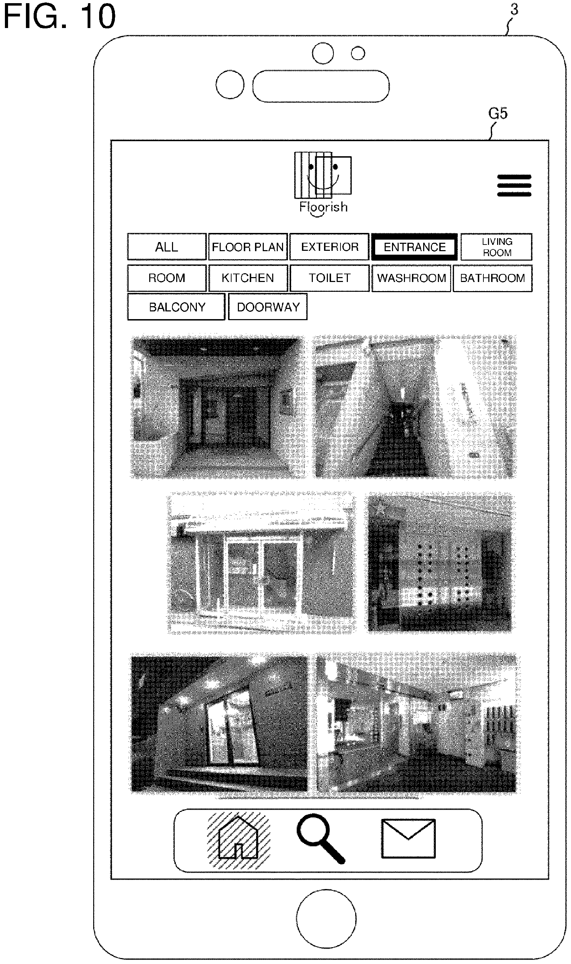

The search result window G5 shown in FIG. 10 is an exemplary window displayed on the display device 300D of the user terminal 3 when the "Entrance" tab is selected. When the "Entrance" tab is selected, out of all imagery associated with the properties satisfying the search conditions, imagery whose category is entrance is displayed. Here, the display device control unit 305 does not display the imagery sorted for each property and displays the imagery on the display device 300D unsorted for each property. That is, the imagery is displayed in a random manner without being organized for each property. Note that, by scrolling the window on the display device 300D, the user can have hidden imagery displayed on the display device 300D.

The foregoing is the description about the imagery displayed on the display device 300D of the user terminal 3 when the "All", "Floor plan", and "Entrance" tabs are selected. When one of the other tabs is selected, out of all imagery associated with the properties satisfying the search conditions, imagery whose category corresponds to the selected tab is displayed.

By the user selecting (tapping) any preferred imagery out of the imagery displayed on the search result window of the display device 300D, a star symbol is applied to the selected imagery. The user DB1 stores the information that the user has selected the imagery. This realizes learning the user's preference on imagery.

### (Property Details Window G6)

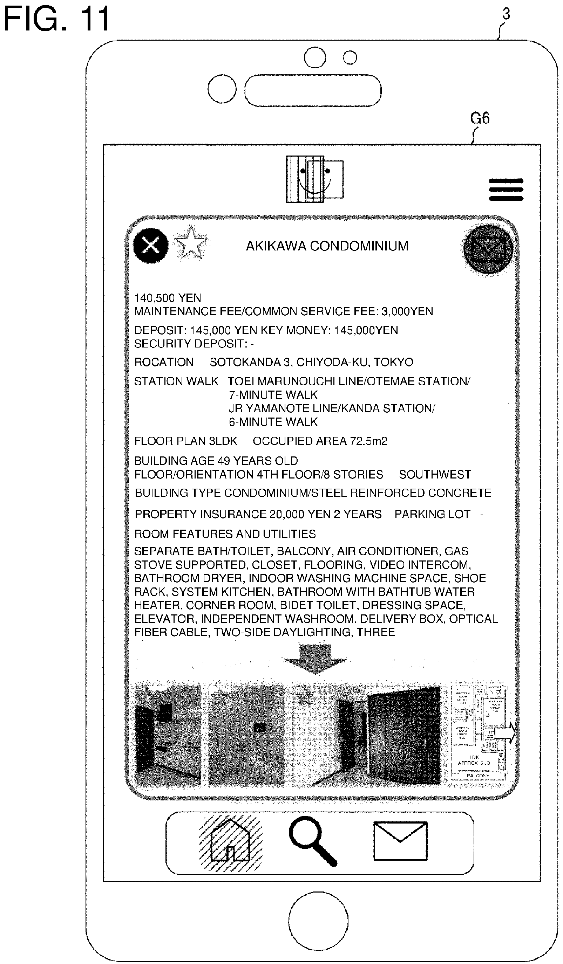

A property details window G6 shown in FIG. 11 is an exemplary window for property details displayed on the display device 300D of the user terminal 3. When the user presses and holds the selected imagery on the search result window out of the displayed imagery on the display device 300D, as shown in FIG. 11, the details of the property corresponding to the imagery, specifically, the property information of the property stored in the property DB2, is displayed.

### (Process Executed in Information Processing System 1)

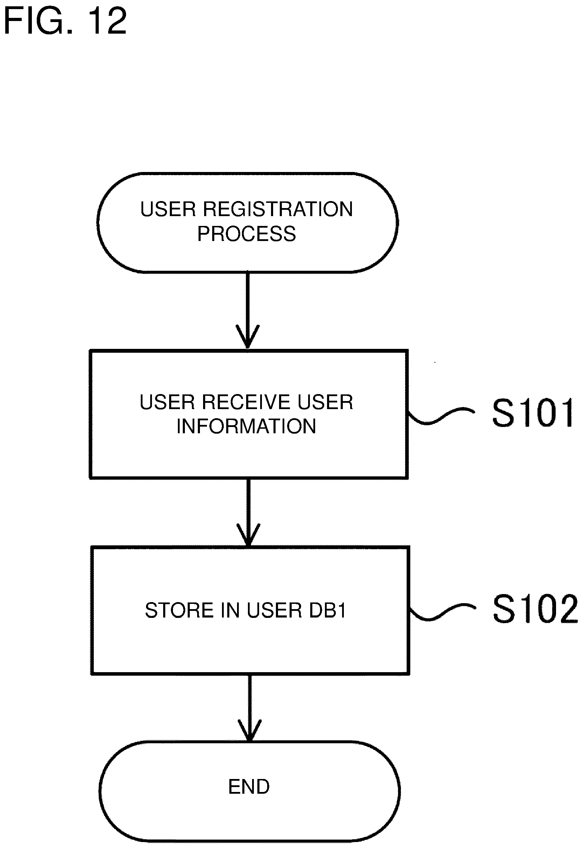

FIGS. 12 to 16 are each a flowchart of an exemplary process executed in the information processing system 1. In the following, with reference to FIGS. 12 to 16, the process executed in the information processing system 1 will be described. Those configurations having already described with reference to FIGS. 1 to 11 will be denoted by the same reference signs, and their description will not be repeated.

### (User Registration Process)

FIG. 12 is a flowchart of an exemplary user registration process executed in the information processing system 1. In the following, with reference to FIG. 12, a description will be given of an exemplary user registration process executed in the information processing system 1.

### (Step S101)

The user operates the input device 300C to enter the user information, which has been described with reference to FIG. 3. The transmission unit 302 of the user terminal 3 transmits the entered user information to the server 2. The reception unit 201 of the server 2 receives the user information transmitted from the user terminal 3.

### (Step S102)

The storage device control unit 203 of the server 2 associates the received user information with a user ID and stores the information in the user DB1 of the storage device 200B. The storage device control unit 203 of the server 2 associates the user ID with a login ID and a login password and stores the user ID in the storage device 200B. Here, the server 2 may assign the user ID, the login ID, and the login password to the user, or the user may create them.

### (Property Registration Process)

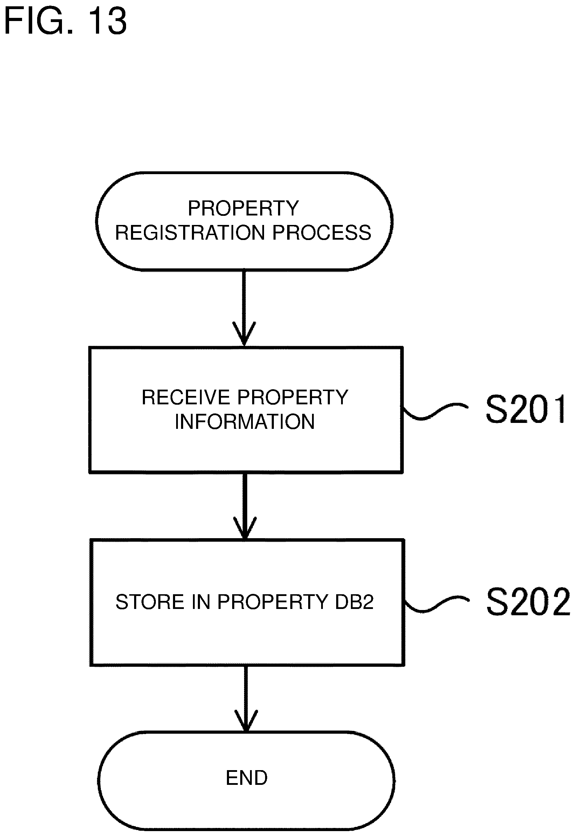

FIG. 13 is a flowchart of an exemplary property registration process executed in the information processing system 1. In the following, with reference to FIG. 13, a description will be given of an exemplary property registration process executed in the information processing system 1.

### (Step S201)

The reception unit 201 of the server 2 receives the property information entered by the agency, which has been described with reference to FIG. 4.

### (Step S202)

The storage device control unit 203 of the server 2 associates the received property information with a property ID and stores the property information in the property DB2 of the storage device 200B.

### (Search Condition Registration Process)

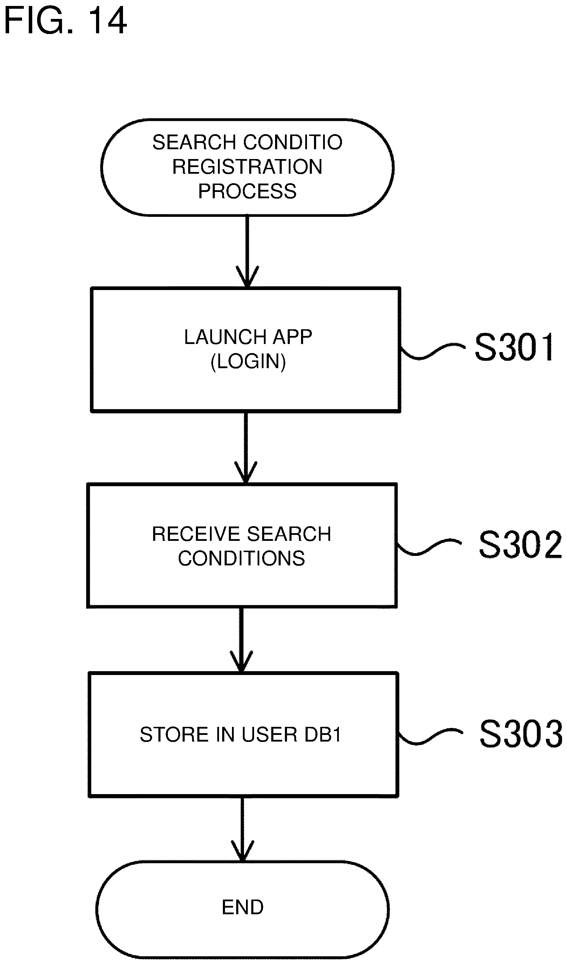

FIG. 14 is a flowchart of an exemplary search condition registration process executed in the information processing system 1. In the following, with reference to FIG. 14, a description will be given of an exemplary search condition registration process executed in the information processing system 1.

### (Step S301)

The user operates the input device 300C to launch the app installed in the user terminal 3. Then, the transmission unit 302 of the user terminal 3 transmits the login ID and the login password stored in the storage device 300B of the user terminal 3 to the server 2. The reception unit 201 of the server 2 receives the login ID and the login password transmitted from the user terminal 3. The authentication unit 207 of the server 2 authenticates the login ID and the login password. The authentication unit 207 determines whether there is a combination of login ID and login password stored in the storage device 200B that matches a combination of login ID and login password of the user trying to log in. If there is a matching combination, the authentication unit 207 allows the user to log in, and control transits to Step S302. On the other hand, when there is no matching combination, the authentication unit 207 does not allow the user to log in and displays an error message. Specifically, the authentication unit 207 instructs the transmission unit 202 to transmit information indicative of the login failure. According to the instruction of the authentication unit 207, the transmission unit 202 transmits the information indicative of the login failure. The information indicative of the login failure transmitted from the server 2 is received by the reception unit 301 of the user terminal 3 and displayed on the display device 300D by the display device control unit 305.

### (Step S302)

The user operates the input device 300C to enter search conditions on the search windows G1, G2, which have been described with reference to FIGS. 6 and 7. The transmission unit 302 of the user terminal 3 transmits the entered search conditions to the server 2. The reception unit 201 of the server 2 receives the search conditions transmitted from the user terminal 3.

### (Step S303)

The storage device control unit 203 of the server 2 associates the received search conditions with the user ID and stores the search conditions in the user DB 1 of the storage device 200B.

### (Learning Process)

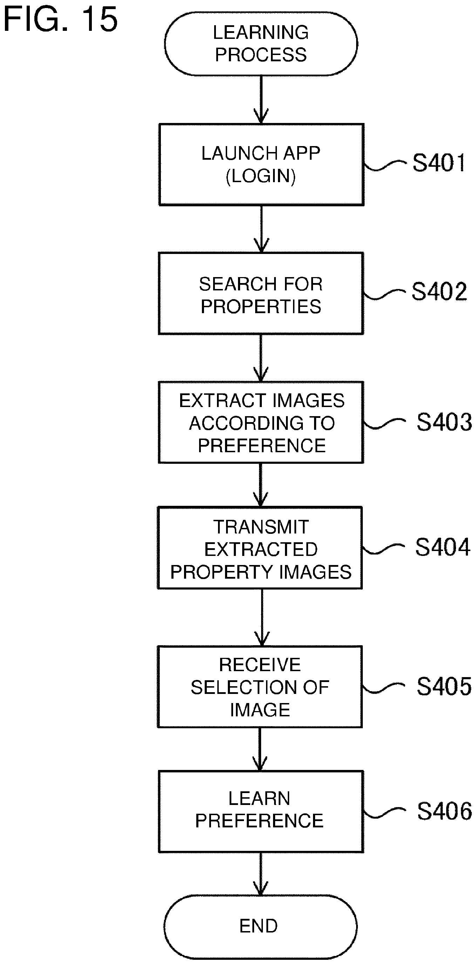

FIG. 15 is a flowchart of an exemplary learning process executed in the information processing system 1. In the following, with reference to FIG. 15, a description will be given of an exemplary learning process executed in the information processing system 1.

### (Step S401)

The user operates the input device 300C to launch the app installed in the user terminal 3. Then, the transmission unit 302 of the user terminal 3 transmits the login ID and the login password stored in the storage device 300B of the user terminal 3 to the server 2. The reception unit 201 of the server 2 receives the login ID and the login password transmitted from the user terminal 3. The authentication unit 207 of the server 2 authenticates the login ID and the login password. The authentication unit 207 determines whether there is a combination of login ID and login password stored in the storage device 200B that matches a combination of login ID and login password of the user trying to log in. If there is a matching combination, the authentication unit 207 allow the user to log in, and control transits to Step S402. On the other hand, if there is no matching combination, the authentication unit 207 does not allow the user to log in and displays an error message. Specifically, the authentication unit 207 instructs the transmission unit 202 to transmit information indicative of the login failure. According to the instruction of the authentication unit 207, the transmission unit 202 transmits the information indicative of the login failure. The information indicative of the login failure transmitted from the server 2 is received by the reception unit 301 of the user terminal 3 and displayed on the display device 300D by the display device control unit 305.

### (Step S402)

The searching unit 206 of the server 2 refers to the user DB 1 and searches the property DB2 for properties that satisfy the search conditions stored in the user DB 1.

### (Step S403)

According to the user's preference for properties learned by the learning unit 204, the extracting unit 205 of the server 2 extracts imagery sequentially in descending order of user's preference for properties from the properties retrieved by the searching unit 206. When the learning unit 204 has not learned yet, the extracting unit 205 extracts imagery retrieved by the searching unit 206 sequentially irrespective of preference.

### (Step S404)

The transmission unit 202 of the server 2 transmits the imagery extracted by the extracting unit 205 to the user terminal 3 in the order of extraction. The imagery transmitted from the server 2 is received by the reception unit 301 of the user terminal 3 and displayed on the display device 300D by the display device control unit 305 in the order of extraction.

### (Step S405)

The user operates the input device 300C to select favorite imagery out of the imagery displayed on the window of the display device 300D of the user terminal 3. The transmission unit 302 of the user terminal 3 transmits the imagery selection result to the server 2. The reception unit 201 of the server 2 receives the selection result transmitted from the user terminal 3.

### (Step S406)

The learning unit 204 of the server 2 learns the user's preference for properties according to the selection result received by the reception unit 201. Specifically, according to the user-selected imagery received by the reception unit 201, the learning unit 204 updates the numerical value of the user's preference stored in the learning DB3 for each imagery category and learns the user's preference for properties for each imagery category (e.g., floor plan, exterior, entrance, doorway, living room, kitchen, washstand, interior, storage, view, toilet, bath (bath), balcony and others).

By repeating Steps S402 to S406, the learning unit 204 learns the user's preference for properties for each imagery category. Thus, the learning unit 204 learns the user's preference trends for floor plan, exterior, entrance, kitchen and others.

### (Learning Reset Process)

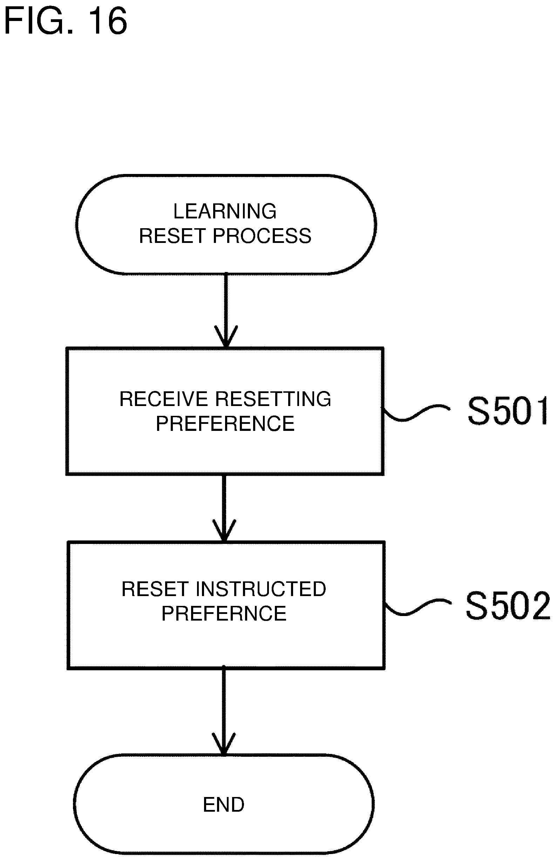

FIG. 16 is a flowchart of an exemplary learning reset process executed in the information processing system 1. In the following, with reference to FIG. 16, a description will be given of an exemplary learning reset process executed in the information processing system 1.

### (Step S501)

The reception unit 201 of the server 2 receives, from the user terminal 3, resetting the user's preference for properties learned by the learning unit 204 for each imagery category (e.g., exterior, entrance, floor plan and others).

### (Step S502)

According to the imagery category instructed to be reset as received by the reception unit 201, the learning unit 204 of the server 2 resets the user's preference for properties for each imagery category.

As described above, the server 2 (information processing device) according to the embodiment includes: the transmission unit 202 transmitting two or more pieces of imagery of properties to the user terminal 3; the reception unit 201 receiving a result of selecting one or more pieces of imagery from the two or more imagery pieces transmitted by the transmission unit 202; the learning unit 204 learning user's preference for properties according to the selection result received by the reception unit 201; and an extracting unit 205 extracting, according to the user's preference for properties learned by the learning unit 204, imagery sequentially in descending order of preference from the property DB2 (storage unit) storing two or more imagery pieces for each property. The transmission unit 202 of the server 2 transmits the imagery extracted by the extracting unit 205 to the user terminal 3 in the order of extraction.

The transmission unit 202 of the server 2 according to the embodiment transmits imagery in two or more categories per property to the user terminal 3.

According to the category of the image as to which selection is received by the reception unit 201, the learning unit 204 of the server 2 according to the embodiment learns the user's preference for properties for each imagery category.

The server 2 according to the embodiment further includes the searching unit 206 that searches for properties according to search conditions. The transmission unit 202 of the server 2 transmits the property imagery retrieved by the searching unit 206 to the user terminal.

The reception unit 201 of the server 2 according to the embodiment receives an instruction to reset the user's preference for properties learned by the learning unit 204 for each category. According to the instruction received by the reception unit 201 to reset the preference, the learning unit 204 of the server 2 resets the user's preference for properties for each imagery category.

The information processing system 1 according to the embodiment includes the user terminal 3 and the server 2 (information processing device) communicating with the user terminal 3. The user terminal 3 includes: the reception unit 301 receiving two or more property imagery pieces transmitted by the server 2; the display device control unit 305 displaying the two or more property imagery pieces received by the reception unit 301; the operation accepting unit 304 accepting selection of one or more pieces of imagery from the two or more imagery pieces displayed by the display device control unit 305; and the transmission unit 302 transmitting the selection accepted by the operation accepting unit 304 to the server 2.

The display device control unit 305 of the user terminal 3 displays imagery unsorted for each property.

As described above, the information processing system 1 according to the present embodiment extracts and displays (feeds) property imagery that satisfies the search conditions on the user terminal 3. That is, since the user can pick a visually intriguing property from among those meeting the search conditions, the user is likely to find one matching the user's preference.

The system learns the user's preference for properties not by text information but by imagery. This helps the user to find properties visually matching the user's preference such as "favorite-style kitchen", "bathtub size", "living room with sunlight".

In learning, when the user selects favorite imagery, properties having similar floor plan or photos and satisfying the search conditions are prioritized and extracted. This further helps the user to find properties that match his/her imagination and reduces the time and stress of the user's search.

The system makes it easier for the user to find properties that match the user's preference without having to enter search conditions each time or searching for properties by changing search conditions through trial and error.

The user can launch the app and view imagery at any time during his/her spare time. This makes it easier to find properties that match the user's preference from newly registered properties in the property DB2.

Through the search window G2 shown in FIG. 7, the user can search for properties according to the commutability (walking time from the station, the number of stations, the number of transfers), which is very convenient.

Conventional real estate search sites will return a large number of properties, forcing the user to search with narrower search conditions such as the nearest station. The system allows the user to search according to the commutability. This increases the possibility of finding properties matching the user's preference in areas (regions) not previously envisioned by the user.

Conventionally, the imagery is displayed as being sorted for each property. In the present embodiment, the display device control unit 305 does not display the imagery sorted for each property and displays the imagery on the display device 300D unsorted for each property. The imagery presented randomly or arbitrarily, irrespective of properties, will prevent the user's viewing experience from becoming tedious, leading the user to find the one in his/her mind. (For example, conventionally, the user would have dismissed consideration of a property based on one piece of imagery. However, another imagery of the same property can attract the user. It is expected that the user is less likely to reject a property based on the impression of just a single or a few pieces of imagery.)

Note that, the display device control unit 305 of the user terminal 3 may display imagery sorted for each property as in the conventional manner.

The imagery displayed (fed) by the system can be limited, such as, to kitchen only, floor plan only, living room only, or building entrance only. The user can compare properties by the imagery category such as kitchen only, floor plan only, living room only. This can help to clarify preferences and requirements that the user may not have been aware of. The user may find that properties searched for the same search conditions would give a different impression.

The preference can be reset for each imagery category. When the user's preference has changed or the user continuously finds that the displayed (fed) imagery is not what he/she has in his/her mind, the user can reset the preference for each imagery category, which is very convenient. Thus, the system can address the situation in which the displayed (fed) imagery of entrance matches the user's preference but the displayed (fed) imagery of kitchen does not, which is very convenient.

### [First Variation of Embodiment]

In the embodiment, the user selects favorite imagery, and the system learns the user's preference for properties based on that the selected imagery is the user's favorite imagery. Here, the user may operate the input device 300C to select imagery and assign a preference degree (e.g., "Like" or "Dislike" or values of several stages (e.g., 1 to 5) representing "Like" and "Dislike") for the selected imagery.

In this case, the reception unit 201 of the server 2 receives information about the selected imagery and the preference degree for the imagery transmitted from the user terminal 3. The learning unit 204 of the server 2 learns the user's preference for properties according to the imagery and the preference degree for imagery received by the reception unit 201.

This configuration realizes more detailed learning of the user's preference for properties.

### [Second Variation of Embodiment]

In the embodiment, the user's preference is learned by machine learning, and based on the learned content, the imagery of properties that would match the user's preference is extracted and displayed (fed) on the user terminal 3. Here, machine learning is not necessarily used. In a second variation of the embodiment, a description will be given of the configuration in which scores are assigned to properties based on imagery selected by the user, according to which assignment the imagery of properties that would match the user's preference is displayed (fed) on the user terminal 3.

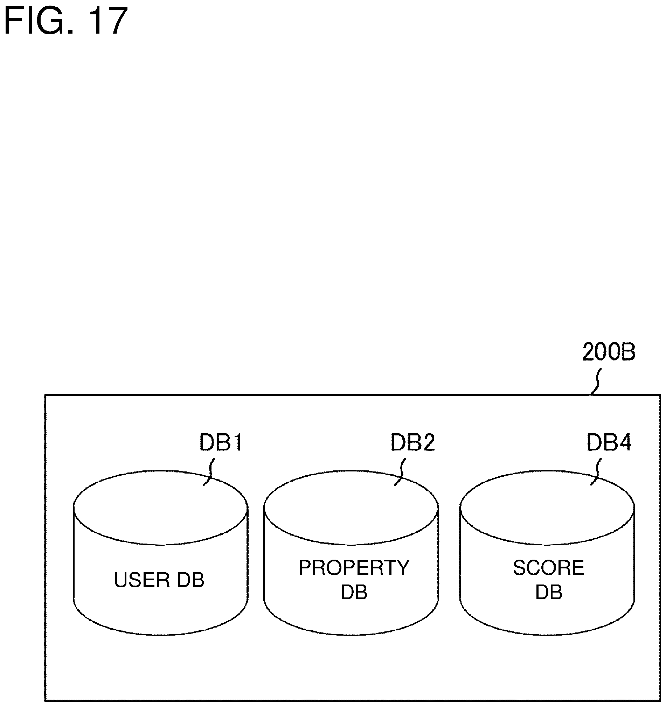

FIG. 17 shows an exemplary database stored in a storage device 200B of a server according to the second variation of the embodiment. As shown in FIG. 17, the storage device 200B of the second variation of the embodiment stores the user DB1, the property DB2, a score DB4 and others. The user DB1 and the property DB2 have already been described with reference to FIG. 3, and therefore a description will be given of the score DB4 avoiding repetitive descriptions.

The score DB4 stores scores assigned by a score assigning unit 208, which will be described later, for each imagery category in association with property's property IDs and user IDs. Here, the property IDs are the property IDs of the properties assigned the scores. The user IDs are the user IDs of users who selected the property imagery. That is, the score DB4 stores the user's preference (likes and dislikes) as scores for each imagery category (e.g., floor plan, exterior, entrance, doorway, living room, kitchen, washstand, interior, storage, view, toilet, bath (bath), balcony and others).

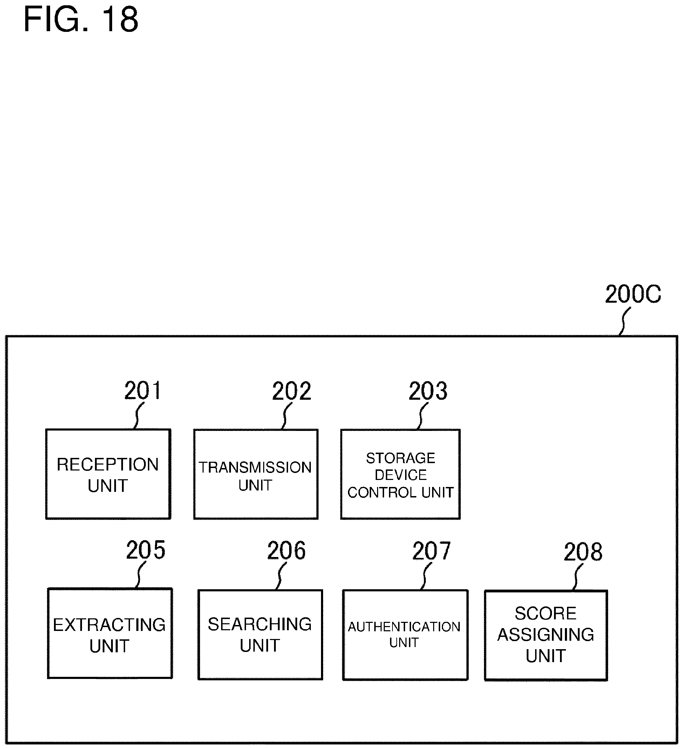

FIG. 18 shows an exemplary functional configuration of the server 2 according to the second variation of the embodiment. As shown in FIG. 4, the server 2 includes functions such as the reception unit 201, the transmission unit 202, the storage device control unit 203, the extracting unit 205, the searching unit 206, the authentication unit 207, the score assigning unit 208 and others. The functions shown in FIG. 18 are realized by the CPU 200C executing an information processing program stored in the ROM (not shown) of the server 2. Here, a description will be given of the difference from the server 2 according to the embodiment having been described with reference to FIG. 4 to avoid repetitive descriptions.

The score assigning unit 208 assigns a score (e.g., 1 point) according to a selection result (e.g., the user placing a star symbol "*" to his/her favorite imagery) received by the reception unit 201. According to the user-selected imagery received by the reception unit 201, the score assigning unit 208 assigns a score to the property for each imagery category (e.g., floor plan, exterior, entrance, doorway, living room, kitchen, washstand, interior, storage, view, toilet, bath (bath), balcony and others). The score assigned by the score assigning unit 208 is stored for each imagery category in the score DB4 in association with the property ID of the property assigned the score and the user ID of the user who selected the property imagery.

The scores assigned to properties for each imagery category demonstrate the user's preference for exterior, entrance, floor plan and others.

Furthermore, for example, according to an instruction to reset the scores received by the reception unit 201, the score assigning unit 208 resets the scores assigned to properties for each imagery category (resets to "0" points).

The extracting unit 205 extracts imagery from properties retrieved by the searching unit 206 according to the properties' scores assigned by the score assigning unit 208. For example, the extracting unit 205 extracts property imagery in descending order of the scores assigned by the score assigning unit 208 from the properties retrieved by the searching unit 206.

### (Score Assigning Process)

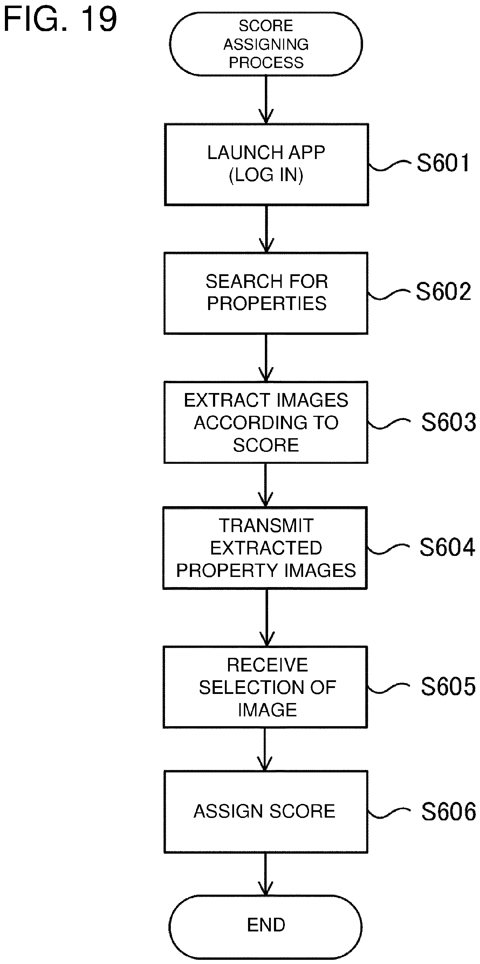

FIG. 19 is a flowchart of an exemplary score assigning process executed in the second variation of the information processing system 1. In the following, with reference to FIG. 19, a description will be given of an exemplary score assigning process executed in the second variation of the information processing system 1.

### (Step S601)

The user operates the input device 300C to launch the app installed in the user terminal 3. Then, the transmission unit 302 of the user terminal 3 transmits the login ID and the login password stored in the storage device 300B of the user terminal 3 to the server 2. The reception unit 201 of the server 2 receives the login ID and the login password transmitted from the user terminal 3. The authentication unit 207 of the server 2 authenticates the login ID and the login password. The authentication unit 207 determines whether there is a combination of login ID and login password stored in the storage device 200B that matches a combination of login ID and login password of the user trying to log in. If there is a matching combination, the authentication unit 207 allow the user to log in, and control transits to Step S602. On the other hand, when there is no matching combination, the authentication unit 207 does not allow the user to log in and displays an error message. Specifically, the authentication unit 207 instructs the transmission unit 202 to transmit information indicative of the login failure. According to the instruction of the authentication unit 207, the transmission unit 202 transmits the information indicative of the login failure. The information indicative of the login failure transmitted from the server 2 is received by the reception unit 301 of the user terminal 3 and displayed on the display device 300D by the display device control unit 305.

### (Step S602)

The searching unit 206 of the server 2 refers to the user DB 1 and searches the property DB2 for properties that satisfy the search conditions stored in the user DB 1.

### (Step S603)

According to the scores assigned by the score assigning unit 208, the extracting unit 205 of the server 2 extracts imagery from the properties retrieved by the searching unit 206. For example, the extracting unit 205 extracts imagery in descending order of assigned scores. When the score assigning unit 208 has not assigned scores yet, the extracting unit 205 extracts imagery retrieved by the searching unit 206 sequentially irrespective of preference.

### (Step S604)

The transmission unit 202 of the server 2 transmits the imagery extracted by the extracting unit 205 to the user terminal 3 in the order of extraction. The imagery transmitted from the server 2 is received by the reception unit 301 of the user terminal 3 and displayed on the display device 300D by the display device control unit 305 in the order of extraction.

### (Step S605)

The user operates the input device 300C to select favorite imagery out of the imagery displayed on the window of the display device 300D of the user terminal 3. The transmission unit 302 of the user terminal 3 transmits the imagery selection result to the server 2. The reception unit 201 of the server 2 receives the selection result transmitted from the user terminal 3.

### (Step S606)

The score assigning unit 208 of the server 2 assigns scores to properties according to the selection result received by the reception unit 201. Specifically, according to the user-selected imagery received by the reception unit 201, the score assigning unit 208 assigns a score to the property for each imagery category. The score assigned by the score assigning unit 208 is stored in the score DB4 in association with the property ID of the property assigned the score and the user ID of the user who selected the property for each imagery category.

### (Score Resetting Process)

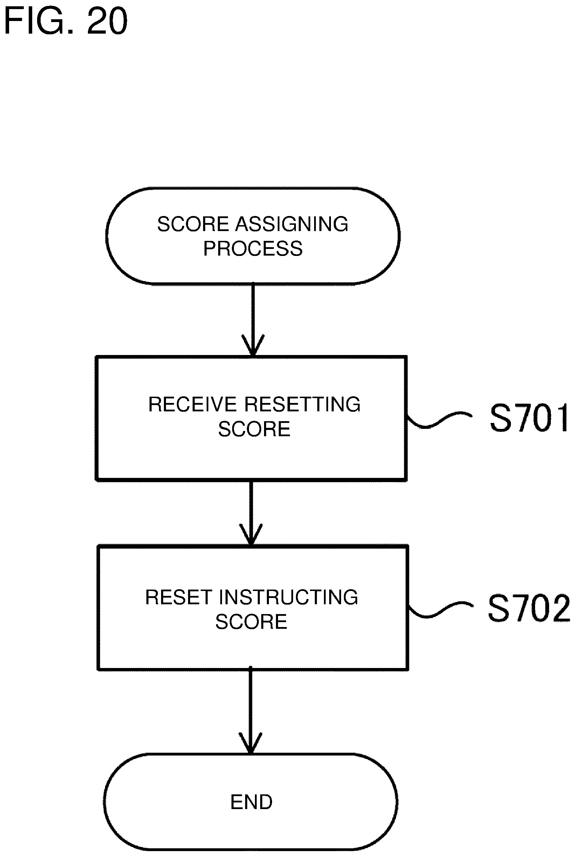

FIG. 20 is a flowchart of an exemplary score resetting process executed in the second variation of the information processing system 1. In the following, with reference to FIG. 20, a description will be given of an exemplary score resetting process executed in the second variation of the information processing system 1.

### (Step S701)

The reception unit 201 of the server 2 receives an instruction to reset the scores assigned to the properties by the learning unit 204 transmitted from the user terminal 3 for each imagery category (e.g., exterior, entrance, floor plan).

### (Step S702)

According to the imagery category instructed to reset received by the reception unit 201, the score assigning unit 208 of the server 2 resets the scores assigned to the properties for each imagery category (resets to "0" points).

When selecting the imagery operating the input device 300C, the user may enter the preference degree (e.g., assessment in several stages such as the number of stars or points from 1 to 5) for the selected imagery. In this case, the reception unit 201 of the server 2 receives the selected imagery and the preference degree for imagery transmitted from the user terminal 3. The score assigning unit 208 of the server 2 assigns a score according to the imagery and the preference degree for imagery received by the reception unit 201. This demonstrates the user's preference for properties in more detail.

By configuring the system as described above, when the user selects imagery by placing a star symbol "*" on imagery he/she likes, the score of the property associated with the imagery becomes higher. The properties that have collected more star symbols "*" on imagery, or the properties that have scored higher, are displayed with priority. As a result, properties that better match the user's preference are displayed higher.

In the conventional search method, the user must view imagery piece by piece in turn for each property. For example, if the user does not like the very first imagery (e.g., entrance), he/she may not try to view imagery of other categories (e.g., kitchen), thus overlooking properties that potentially match his/her preference. On the other hand, in the information processing system 1 according to the second variation of the embodiment, imagery is displayed (fed) on the user terminal 3 unsorted for each property, and the user selecting favorite imagery assigns a score to the corresponding property. Unlike the conventional search method, this prevents the user from overlooking properties that match his/her preference, which can otherwise happen when the user does not like the very first imagery (e.g., entrance) and does not try to view imagery of other categories (e.g., kitchen).

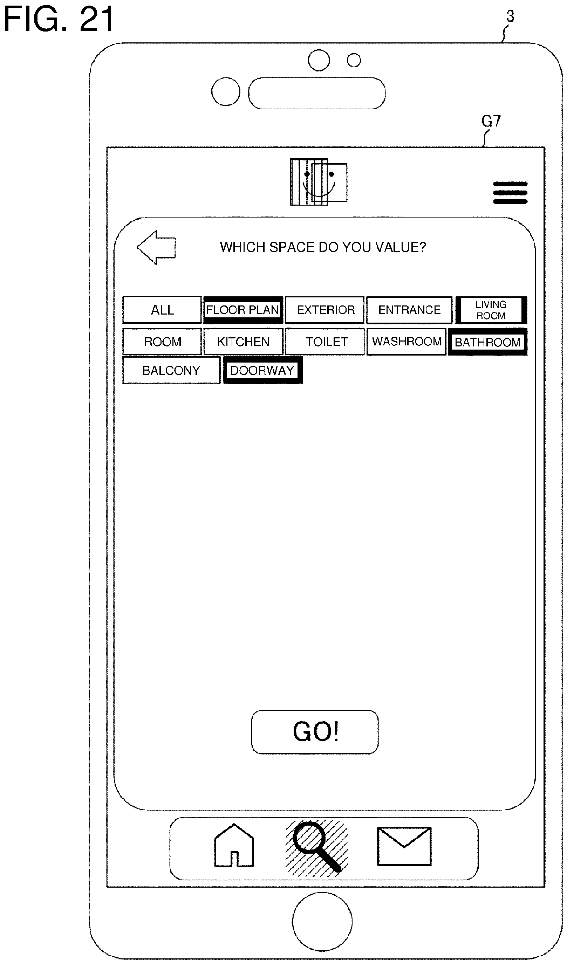

In the second variation, on the search window G1 described with reference to FIG. 6, in addition to the items "What type of properties would you like to see?" and "Which area would you like to see properties in?", the window may additionally show the item "Which space do you value the most?". FIG. 21 is an exemplary window of space category entry G7, which allows the user to enter which space he/she values most. The user may operate the input device 300C of the user terminal 3 to select, for example, the imagery category (e.g., all, (properties') floor plan, exterior, entrance, doorway, living room, room (interior), kitchen, toilet, bathroom (bath), balcony as well as washstand, interior, storage, view and others). When the user selects imagery in the same category selected in response to the item (when the selection is received in Step S605 in FIG. 19), the property may gain a higher score than when imagery in other categories is selected. (e.g., A property is normally assigned one point; when the user selects imagery whose category is the one designated in response to the item "Which space category do you value the most?", the property corresponding to the selected imagery gains two points.)

By this configuration, the user becomes more likely to find properties that better match his/her preference.

### [Third Variation of Embodiment]

In the embodiment, the user's preference is learned, and imagery is extracted according to the learning result to be transmitted to the user terminal 3. Here, from among imagery pieces of an identical or different properties selected by another user who has selected the same imagery as the user and thus has a similar preference to the user, imagery satisfying the search conditions entered by the user may be preferentially extracted and transmitted to the user terminal 3. In this configuration, learning by the learning unit 204 is not limited to the user's selection and imagery selected by another user having a similar preference is also transmitted (fed) to the user terminal 3. Thus, the user can more effectively find properties that match his/her preference.

Thus, for example, the system can extract property images based on the assessment of another user having a similar preference and transmit them to the user terminal 3. Thus, for example, images of properties with good sunlight conditions desired by the user (satisfying the search conditions) can be extracted and transmitted to the user terminal 3 based on the sunlight assessment by another user having a similar preference; images of properties having utilities desired by the user (satisfying the search conditions) can be extracted and transmitted to the user terminal 3 based on the assessment about utilities (e.g., imagery of kitchen, bathtub and others) by another user having a similar preference; and images of properties having utilities desired by the user (satisfying the search conditions) can be extracted and transmitted to the user terminal 3 based on the appearance assessment on space (e.g., images of interior, entrance, living room, exterior and others) by another user having a similar preference.

The sunlight for each time slot can be estimated by identifying the space of a sunny image selected by the user (e.g., an image of living room, kitchen, bedroom and others) and referring to its position and orientation in the floor plan. Thus, the system can accept an entry from the user specifying the time slot in which sunlight is needed, and transmit the images of properties having a room with plenty of sunlight in the specified time slot to the user terminal 3.

For example, the server 2 can transmit the images of properties having a room with plenty of sunlight in the specified time slot to the user terminal 3 by:
(1) receiving a user's preference for sunlight (e.g., wants to live in a house with a living room (which is merely an example and can be bedroom or kitchen) with plenty of sunlight in the afternoon),
(2) selecting properties having a living room with plenty of sunlight in the afternoon by identifying the room in the floor plan and referring to a compass,
(3) determining whether there is sunshine by machine learning in the image of the living room of the properties, and
(4) if there is sunshine, transmitting the property images to the user terminal 3 to present them as candidate properties.

Anyone who has selected a certain number of images identical to the user's selection may qualify as another user having a similar preference.

Alternatively, anyone who has selected images identical to the user's selection (equal in number) by a certain percentage (e.g., 70% or more) to the other selected and different images (not equal in number) may qualify as another user having a similar preference.

In the above description, the property images favored by another user having a similar preference are transmitted to the user terminal 3. Here, the property images favored by another user having an identical or similar attribute may be transmitted to the user terminal 3. For example, anyone who has the identical or similar attributes in user information, specifically, gender, age, family structure, and search conditions (if entered by the user) may qualify as another user having an identical or similar attribute.

### [Fourth Variation of Embodiment]

The system may send images of properties to the user terminal 3 taking into account of the mobility around the property (which can be calculated from the address of the property and the amount of traffic around the property) and facilities around the property according to the gender, age, and family structure in the user information. The walkability or mobility around the property can be assessed based on the difference in elevation and the traffic congestion information around the property. For example, if the user has an elder, infant, or sickly family member, images of properties on flat land offering good mobility or properties having a hospital or clinic within a 5-minute walk may be prioritized for transmission to the user terminal 3. If the user is single, images of properties may be transmitted to the user terminal 3 without considering (without prioritizing) the mobility around the property or the surrounding facilities.

The system may transmit images of properties to the user terminal 3 taking into account of at least one of the congestion and delay rates of the nearest station (which can be calculated from the congestion and delay ranking of the nearest station of the property) according to gender, age, family structure, and remote work frequency in the user information. For example, if the remote work frequency is high (e.g., three or more days per week), the system may transmit property images to the user terminal 3 without considering at least one of the congestion and delay rates of the nearest station. And if the remote work frequency is low (e.g., one day per week or less), the system may transmit property images to the user terminal 3 considering at least one of the congestion and delay rates of the nearest station.

### [Fifth Variation of Embodiment]

In the first to fourth variations of the embodiment, the risk attributed to the location of properties may be presented. In this case, a risk assessment DB5 for assessing the location risk is stored in the storage device 200B of the server 2. The risk assessment DB5 stores, for example, various information for calculating the property location risk for each area. Here, the various information includes a damage degree (a numerical value representing the magnitude of damage) in the event of a natural disaster. The natural disaster includes at least one of river flooding, landslide disaster, earthquake disaster, volcanic disaster, tsunamis, storm surges, and temperature.

Among the natural disasters, the damage degree in the event of river flooding, landslide disaster, earthquake disaster, volcanic disaster, tsunamis, or storm surges is calculated based on the information provided in hazard maps provided by, for example, the Ministry of Land, Infrastructure, Transport and Tourism and local governments. Here, the criteria may vary among hazard maps issued by the national and municipal governments. Therefore, preferably, the information on the hazard maps should be standardized to a specified standard, and then the damage degree (the magnitude of damage) in the event of river flooding, landslide disaster, earthquake disaster, volcanic disaster, tsunamis, and storm surges among the natural disasters should be calculated.

The risk assessment DB5 stores the probability of occurrence of the natural disasters for each area. The occurrence probability indicates the possibility of flood damage exceeding a predetermined standard value (predetermined damage area or damage amount). For example, it is calculated based on information such as the damage area and damage amount caused by flood damages and water level information due to global warming for each municipality, for which statistics are collected annually by the Ministry of Land, Infrastructure and Transport.

The risk assessment DB5 also stores heat stroke and temperature-caused poor health in each area, which is calculated based on the number of past annual extremely hot days in each are disclosed by the Japan Meteorological Agency.

The server 2 includes a determination unit that determines which area properties are included based on the location information (location (address)) of the properties, and an assessment unit that assesses the location risk of the properties retrieved by the searching unit 206. The assessment unit refers to, for example, the risk assessment DB5 and assesses the property location risk by multiplying the damage degree in the event of a natural disaster in the area determined by the determination unit by the natural disaster occurrence probability.

The assessment unit refers to the risk assessment DB5 and identifies the heat stroke and temperature-caused poor health risk in the area determined by the determination unit as the property location risk. The property location risk calculated in this manner may be presented with the property information. This configuration allows the user to find properties that match his/her personal preference within safe locations.

The system may be configured to allow the user to search for properties by taking into account of the location risk when searching. In this case, the item location risk is added to the search conditions, and the searching unit 206 searches for properties with a location risk equal to or greater than the entered value.

The embodiment and the first to third variations are merely exemplary embodiments of the present invention, and the technical scope of the present invention should not be construed as limited thereby. In other words, the present invention can be implemented in various modes without deviating from its gist or its main characteristics.

For example, when the user clicks (presses and holds) on imagery of interest, the system may display a list of property information including the imagery for that property. In the list display, the user may be able to add a star symbol "*" on the window to save (i.e., even though the pieces of imagery are displayed in an unorganized manner, information pieces including imagery of a property are associated with each other by the property DB2 and the learning DB3).

The system may be configured to be searchable by a specific school district or commuting range. In this case, the property DB2 stores the specific school district and commuting range in association with each other. Thus, the system can present a recommended region to commute to school based on the data of the student's commuting origin region. The system may show the best recommended region when the user enters information of not only one school but multiple schools.

### Reference Signs List

1 information processing system
2 server (information processing device)
200A communication IF
200B storage device
200C CPU
201 reception unit
202 transmission unit
203 storage device control unit
204 learning unit
205 extracting unit
206 searching unit
207 authentication unit
208 score assigning unit
3 user terminal
300A communication IF
300B storage device
300C input device
300D display device
300E GPS sensor
300F CPU
301 reception unit
302 transmission unit
303 storage device control unit (display control unit)
304 operation accepting unit (accepting unit)
305 display device control unit
4 network
DB1 user database
DB2 property database
DB3 learning database
DB4 score database

## Claims

1. An information processing device comprising:
a storage unit storing images or videos in two or more categories for each property; and
a transmission unit transmitting the images or videos in two or more categories for each property to a user terminal.

2. The information processing device according to claim 1, further comprising a reception unit receiving specifying the image or the video, wherein the transmission unit transmits the property images or videos to the user terminal according to the specifying received by the reception unit.

3. The information processing device according to claim 2, further comprising a score assigning unit assigning a score to the property according to the specifying received by the reception unit, wherein the transmission unit transmits the property images or videos to the user terminal according to the score assigned by the assigning unit.

4. The information processing device according to claim 3, wherein
the reception unit receives the image or the video and a degree of preference for the image or the video, and
the score assigning unit assigns a score to the property according to the image or the video and the degree of preference for the image or the video received by the reception unit.

5. The information processing device according to claim 3, wherein
the reception unit receives an instruction to display details of the property, and
the transmission unit transmits the details of the property for which the instruction to display the details is received to the user terminal with the score assigned to the property.

6. The information processing device according to claim 3, wherein
the reception unit receives an instruction to reset the score to the property assigned by the score assigning unit for each category of the images or the videos, and
the learning unit resets the score assigned to the property for each category of the images or the videos according to the instruction received by the reception unit.

7. The information processing device according to claim 2, further comprising:
a learning unit learning user's preference for properties according to the selection received by the reception unit; and
an extracting unit extracting images or videos from the storage unit storing images or videos in two or more categories for each property according to the user's preference for properties learned by the learning unit, wherein
the transmission unit transmits the images or the videos extracted by the extracting unit to the user terminal.

8. The information processing device according to claim 7, wherein the learning unit learns the user's preference for properties for each category of the images or the videos according to the category of the image or the video as to which selection is received by the reception unit.

9. The information processing device according to claim 7, wherein
the reception unit receives the image or the video and a degree of preference for the image or the video, and
the learning unit learns the user's preference for properties according to the image or the video and the degree of preference for the image or the video received by the reception unit.

10. The information processing device according to claim 7, wherein
the reception unit receives an instruction to display details of the property, and
the transmission unit transmits the details of the property for which the instruction to display the details is received to the user terminal with the degree of the user's preference.

11. The information processing device according to claim 8, wherein
the reception unit receives an instruction to reset the user's preference for properties learned by the learning unit for each category of the images or the videos, and
the learning unit resets the user's preference for properties for each category of the images or the videos according to the instruction received by the reception unit.

12. The information processing device according to claim 1, further comprising a searching unit searching for the properties according to the search conditions, wherein the transmission unit transmits the images or videos of the properties retrieved by the searching unit to the user terminal.

13. The information processing device according to claim 7, wherein the extracting unit extracts the images or the videos from the storage unit storing images or videos in two or more categories for each property according to a preference for properties of another user who has an identical or similar preference or attribute as the user.

14. The information processing device according to claim 7, wherein the extracting unit extracts the images or the videos from the storage unit storing images or videos in two or more categories for each property prioritizing mobility around the properties according to an attribute of the user.

15. The information processing device according to claim 7, wherein the extracting unit extracts the images or the videos from the storage unit storing images or videos in two or more categories for each property prioritizing a congestion or delay rate of a station nearest to the properties according to an attribute of the user.

16. An information processing method comprising:
a storage unit storing images or videos in two or more categories for each property; and
a transmission unit transmitting the images or videos in two or more categories for each property to a user terminal.

17. An information processing program causing a computer to function as:
a storage unit storing images or videos in two or more categories for each property; and
a transmission unit transmitting the images or videos in two or more categories for each property to a user terminal.

18. An information processing system comprising:
a user terminal; and
an information processing device communicating with the user terminal, wherein
the information processing device includes
a storage unit storing images or videos in two or more categories for each property, and
a transmission unit transmitting the images or videos in two or more categories for each property to the user terminal, wherein
the user terminal includes
a reception unit receiving the two or more property images or videos transmitted from the information processing device, and
a display control unit displaying the two or more property images or videos received by the reception unit.

19. The information processing system according to claim 15, wherein the display control unit of the user terminal displays the images or the videos sorted for each of the properties.

20. The information processing system according to claim 15, wherein the display control unit of the user terminal displays the images or the videos unsorted for each of the properties.
